# EUROPEAN PATENT APPLICATION

(11) **EP 1 284 453 A2**
(43) Date of publication of application: **19.02.2003**
(21) Application number: 02254169.2
(22) Date of filing: 14.06.2002
(51) Int. Cl.: G06F 9/445

(54) **Method, device, dynamic linker, and program for retrieving a library for an executing program**

(30) Priority: 14.06.2001 JP 2001179638
(71) Applicant: NEC CORPORATION, Tokyo (JP)
(72) Inventor: Asakura, Yoshiharu, c/o NEC Corporation, Tokyo (JP)
(74) Representative: Moir, Michael Christopher

(57) **Abstract**

An active library retrieval method in a dynamic link which dynamically links a library in execution of a program, comprising the step of changing automatically a retrieval sequence of active library storage areas to be retrieved in accordance with the type of a program in execution.

## Description

### BACKGROUND OF THE INVENTION

The present invention relates to dynamically linking a library file to an executing program. In particular, the present invention relates to an active library retrieval method and device that determine a type of software, and then automatically change the retrieval order of active library storage areas.

A collection of programs, supplied from plural programs and assumed to be shared, is called a library. As a system of incorporating a library in a program, there are two types of systems, namely, a static link system in which linking is performed in compiling, and a dynamic link system in which linking is performed in program execution. The dynamic link system is broadly used for many computers so as avoid wasteful memory use. The library used in the dynamic link system is generally called an active library. For example, in the Windows platform, a system is employed wherein a DLL (Dynamic Link Library) links a library with an executing program. Moreover, in the Java platform, the class is used as a link unit and the dynamic link is realized in the form of calling a required class during execution. In particular, even if required classes are distributed on a different machine separated from a network, Java can establish linking through the network.

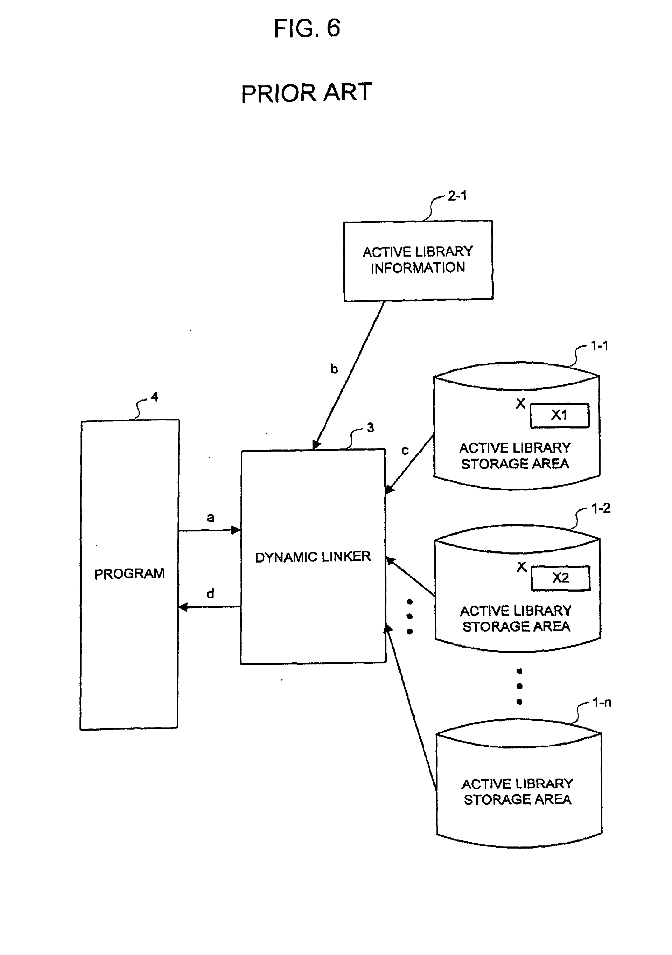

Fig. 6 shows an example of the configuration of a conventional dynamic link system. Referring to Fig. 6, each of numerals 1-l to 1-n represents an active library storage area. The n active library storage areas 1-1 to 1-n are respectively set at predetermined locations. Each active library storage area 1-i (i=1 to n) holds in such a way that one or more active library storage areas can be retrieved with identifiers thereof. The active library information 2-1 uniquely exists in the computer system on which the dynamic linker 3 operates and holds location information about active library storage areas 1-l to 1-n and retrieval sequences. The program 4 is, for example, an application program running on a computer system. When a required library occurs in execution, the program specifies an identifier specifying the library and then calls the dynamic linker 3 (a).

The dynamic linker 3 first refers to active library information 2-1 (b), retrieves a library with a corresponding identifier from the active library storage areas 1-1 to 1-n in accordance with a predetermined retrieval sequence determined by the information 2-1 (c), and then dynamically links the retrieved library to the program 4 (d). For example, when the information 2-1 sets that retrieval is made in the order of the active library storage area 1-1, 1-2,..., and 1-n, the dynamic linker 3 first retrieves a library with a corresponding identifier from the active library storage area 1-1. If there is the corresponding library, the dynamic linker 3 links it to the program **4.** If there is not the corresponding library in the active library storage area 1-1, the dynamic linker 3 retrieves the active library storage area 1-2 to be next retrieved. If there is the corresponding library, the dynamic linker 3 links it to the program 4. In a similar manner, until a corresponding library is found, active libraries are sequentially retrieved in accordance with a retrieval sequence set with the active library information 2-1.

In the conventional system described above, when plural active library storage areas 1-l to 1-n are used, the active library to be retrieved and the retrieval sequence are fixed in the system. The dynamic linker 3 retrieves a library with a corresponding identifier in accordance with the fixed sequence and then links the first found library. Hence, even if a library with the same identifier is stored in a different active library storage area, a library stored in an active library storage area to be retrieved in an earlier sequence is always linked. For that reason, when plural libraries with the same identifier, which are differently installed, are prepared, they cannot be selectively used in accordance with the type of the program 4.

For example, it is assumed that programs 4a and 4b of different types require linking of a library with the same identifier x. Moreover, it is assumed, for example, that the library X1 of version 1 is linked to the program 4a and that the library X2 of version 2 is linked to the program 4b. As shown in Fig. 6, the library X1 is stored in the active library storage area 1-1. The library X2 is stored in the active library storage area 1-2. In this case, when the retrieval sequence set to the information 2-1 corresponds to the order of the active library storage areas 1-1 and 1-2, the program 4a is executed. When the dynamic linker 3 is called out along with the identifier x, the library X1 existing in the active library storage area 1-1 of the retrieval sequence 1 is linked to the program 4a. Hence, trouble does not occur. However, when the program 4b is executed and the dynamic linker 3 is called out along with the identifier x, the library X1 existing in the active library storage area 1-1 of the retrieval sequence 1 is linked to the program 4b. For that reason, it is possible to dynamically link a desired library X2.

### SUMMARY OF THE INVENTION

The present invention is proposed in view of the above-mentioned environments. An object of the preferred embodiment of the present invention is to provide a technique capable of selectively using libraries, each of which has the same identifier but is different in installation, in accordance with the type of a program at a link destination.

The present invention is basically characterized in that when a library is dynamically linked in execution of a program, a retrieval sequence of active library storage areas to be retrieved is automatically changed in accordance with the type of a program in execution.

More specifically, an active library retrieval method according to the present invention comprises the step of (a) selecting active library information from holder means in accordance with the type of a program in execution, the holder means holding the active library information every program type, the active library information determining a retrieval sequence of active library storage areas to be retrieved; and (b) retrieving a library with an identifier specified by a selected active program, in accordance with an active library storage area and a retrieval sequence indicated by selected active library information, and then linking the retrieved library to the program.

Moreover, according to the present invention, an active library retrieval device comprises holder means for holding the active library information every program type, the active library information determining a retrieval sequence of an active library storage area to be retrieved; selector means for selecting active library information from the holder means in accordance with the type of a program in execution; and a dynamic linker for retrieving a library with an identifier specified by a selected active program, in accordance with an active library storage area and a retrieval sequence indicated by selected active library information, and then linking the retrieved library to the program.

Moreover, according to the present invention, a dynamic linker retrieves a library with an identifier specified by a program in execution in accordance with an active library storage area and a retrieval sequence thereof and then linking the retrieved library to the program. The active library storage area and the retrieval sequence are indicated by active library information according to the type of a program in execution of plural sets of active library information determining a retrieval sequence of the active library storage area to be retrieved.

According to the present invention, the retrieval sequence of active library storage areas to be retrieved is automatically changed in accordance with the type of a program in execution. Moreover, a library, which has the same identifier and is differently installed, is selectively used in accordance with the type of a program of a link destination.

### BRIEF DESCRIPTION OF THE DRAWINGS

Preferred features of the present invention will now be described, by way of example only, with reference to the accompanying drawings, in which:-
Fig. 1 is a block diagram illustrating an embodiment according to the present invention;
Fig. 2 is a diagram illustrating contents of active library information classified by program type;
Fig. 3 is a flowchart illustrating the selector means according to an embodiment of the present invention;
Fig. 4 is a diagram illustrating the content of a control table prepared in the selector means according to an embodiment of the present invention:
Fig. 5 is a flowchart illustrating a process of an active linker according to an embodiment of the present invention;
Fig. 6 is a block diagram illustrating the configuration of a conventional dynamic linking system.

### DESCRIPTION OF THE EMBODIMENTS

Next, an embodiment of the present invention will be explained in detail below by referring to the drawings.

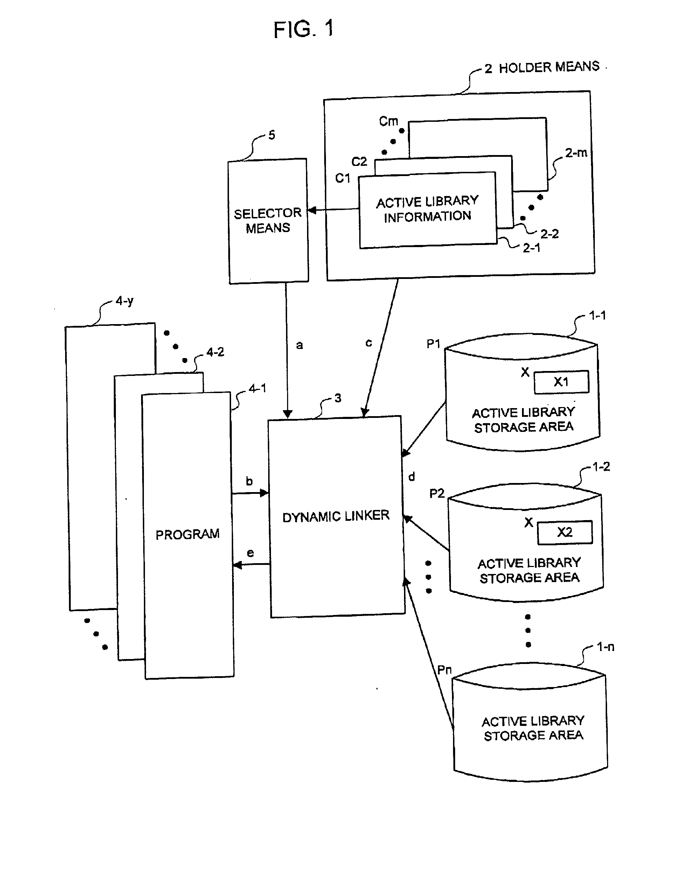

Referring to Fig. 1, an example of a computer system embodying the present invention can be realized by plural active library storage areas 1-1 to 1-n, holder means 2 for holding plural active library information 2-1 to 2-m, a dynamic linker 3, plural programs 4-1 to 4-y, and selector means 5. The active library storage areas 1-1 to 1-n and the holder means 2 are installed to a memory such as a magnetic disk. The dynamic linker 3 and the selector means 5 are realized with a program

n active library storage areas 1-1 to 1-n exist in predetermined memory areas on, e.g. a memory in a computer system and are uniquely specified based on the location information thereof (e.g, name and address attached to each active library storage area). Referring to Fig. 1, location information P1 to Pn are respectively attached on the left shoulder of active library storage areas 1-l to 1-n. Each active library storage area 1-i (i = 1 to n) contains one library or more each having an identifier. when plural libraries, each having the same identifier and being differently installed, are prepared, libraries with the same identifier are distributively stored in different active library storage areas, instead of the same active library storage area 1-1. Fig. 1 shows libraries X1 and X2, each which has the same identifier x and is differently installed. The library X1 is stored in the active library storage area 1-1. The library X2 is stored in the active library storage area 1-2.

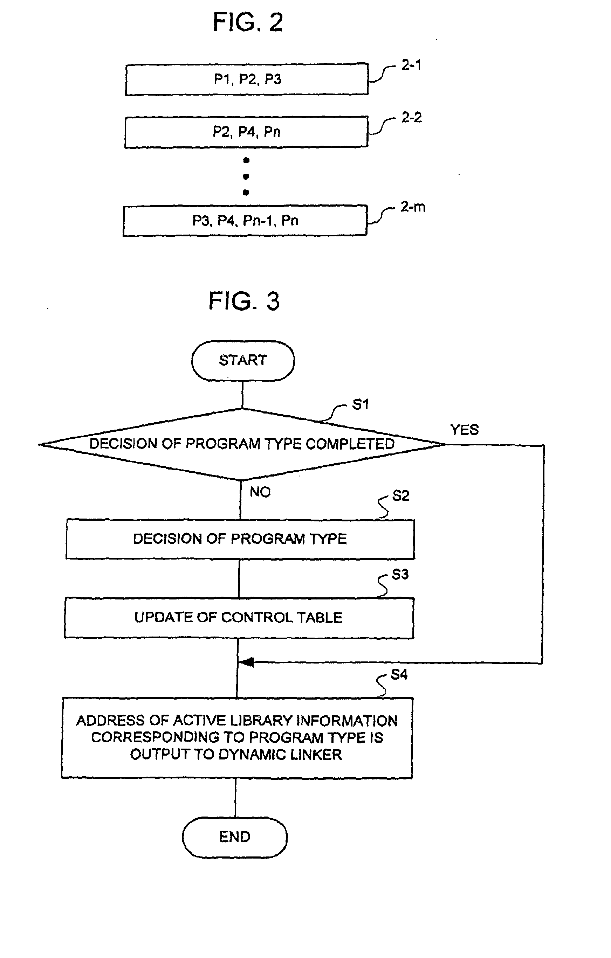

m active library information 2-1 to 2-m correspond to types of programs, respectively. Referring to Fig. 1, program types C1 to Cm are correspondingly attached to the left shoulders of active library information 2-1 to 2-m, respectively. Each active library information 2-j (j = 1 to m) specifies an active library storage area to be retrieved in dynamic linkage of a program of a corresponding type and the retrieval sequence thereof. For example, an active library storage area to be retrieved is specified by describing the location information of an active library storage area. The retrieval sequence is specified in parallel to location information. Fig. 2 shows the contents of active library information 2-1 to 2-m. In the active library information 2-1, three location information P1, P2 and P3 are described in the arranged order as they are. Thus, it is specified that three active library storage areas 1-1 to 1-3 are retrieved. Moreover, it is specified that retrieval is made in the order of the active library storage areas 1-1, 1-2 and 1-3. Similarly, the active library storage information 1-2 specifies that three active library storage areas 1-2, 1-4 and 1-n are retrieved and that retrieval is made in the order of active library storage areas 1-2, 1-4 and 1-n.

The selector means 5 judges the type of a program executed in the computer system and selects one set of active library information in accordance with the type of a program being currently executed, of plural sets of active library information 2-1 to 2-m held in the holder means 2. The method of judging the type of a program depends on classification of a program executed in the computer system. The method of executing judgement based on a program name, the method of executing judgement based on information on a program version, and the method of executing judgement based on an acceding class like the Java program (to be described later) are suitably used.

Plural programs 4-1 to 4-y correspond to an application program running on the computer system. When a necessary library occurs in execution, the program specifies the identifier specifying the library and requires the dynamic linker 3 to establish linkage. In this example, the program type of the program 4-1 is C1 and the program type of the program 4-2 is C2. The libraries X1 and X2, each which has the same identifier x but is installed differently, are called out with the programs 4-1 and 4-2.

When a program in execution issues a link request specifying an identifier, the dynamic linker 3 retrieves a library with an identifier specified by a program in execution, in accordance with an active library storage area and the retrieval sequence indicated by the active library information selected by the selector means 5, and then links it to the program.

Next, the operation of the present embodiment with the above-mentioned configuration will be explained below.

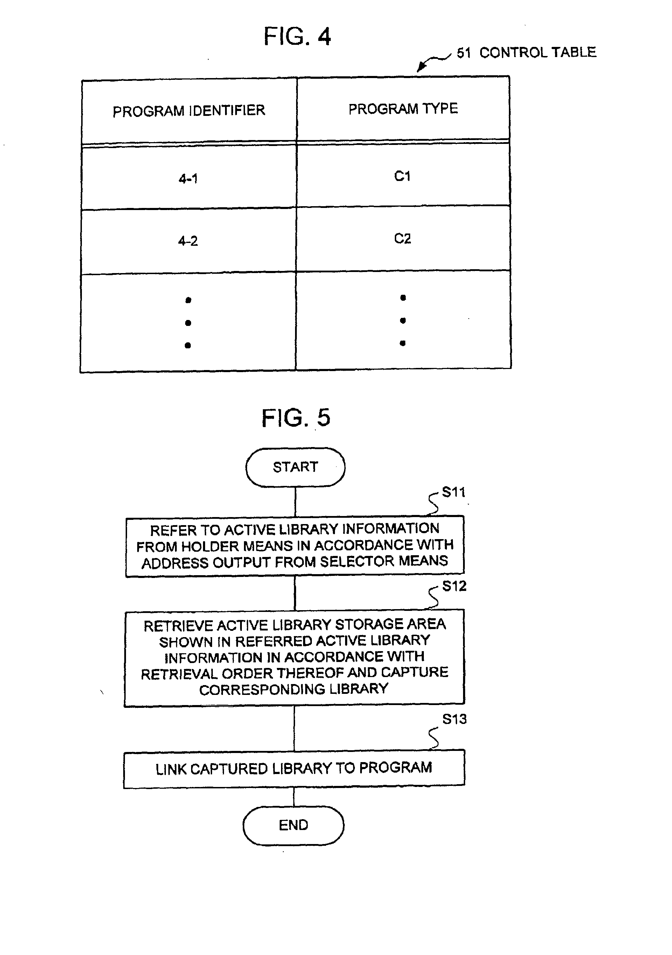

Referring to Fig. 1, when the execution of the program 4-k (k = 1 to y) starts, the selector means 5 implements the process shown in Fig. 3. First, by referring to the control table 51 (shown in Fig. 4) installed inside the selector means 5, the selector means 5 checks whether or not the program type of the program 4-k to be currently executed has been judged (step S1). When both the identifier and the program type of a current program 4-k have been already registered in pair on the control table 51, it is recognized that judgement has been made. If not so, it is recognized that judgement has not been made. In the case of non-judgement, the type of the current program is newly judged (step S2). Thus, the pair of the identifier and the program type is registered on the control table 51 (step S3). Of plural active library information 2-1 to 2-m stored in the holder means 2, the address of the active library information 2-j corresponding to the type of the judged program is output to the dynamic linker 3 (a, step S4). On the other hand, when the program type of the current program 4-k has been already judged, the type of the judged program registered on the control table 51 is referred. Then, the address of the corresponding active library information 2-j is output to the dynamic linker 3 (a, step S4). After completion of the process of the selector means 5, the execution of the program 4-k begins.

When the program 4-k of which execution has been started issues a linker request specifying an identifier to the dynamic linker 3 (b), the dynamic linker 3 refers to the active library information 2-j from the holder means 2 in accordance with an address output from the selector means 5, as shown in Fig. 5 (c, step S11). Next, a target active library storage area to be retrieved. specified with the active library information 2-j, is retrieved in a specified sequence. Thus, a library having an identifier specified from the program 4-k is retrieved (d, step S12). At the point when the library with the identifier is first found, the library is dynamically linked to the program 4-k (e, step S13). By doing so, the process of dynamically linking a library to the program 4-k is completed.

It is assumed, for example, that a program in execution corresponds to the program 4-1 and the identifier of a called library is x. Thus, the program type of the program 4-1 is judged as C1. The active library information 2-1 corresponding to the program type C1 is referred to from the holder means 2. Referring to Fig. 2, the location information P1, P2 and P3 are described in the described order in the active library information 2-1. For that reason, the dynamic linker 3 retrieves the active library storage area 1-1 indicated by the location information P1 with the retrieval sequence No. 1 and captures the library X1 with the identifier x, thus, dynamically linking the library X1 to the program 4-1.

On the other hand, when a program in execution is the program 4-2 and the identifier of a called library is x, it is judged that the program type of the program 4-2 is C2. The active library information 2-2 corresponding to the program type C2 is refereed to from the storage means 2. Referring to Fig. 2, the location information P2, P4 and Pn are described, as they are, in the active library information 2-2. For that reason, the dynamic linker 3 retrieves the active library storage area 1-2 indicated with the location information P2 having the retrieval sequence No. 1, captures the library X2 having the identifier x is captured and thus linking the library X2 to the program 4-2.

In the active library information 2-1 to 2-m according to the embodiment, active library storage areas to be retrieved are uniquely set every program type. However, all active library storage areas to be retrieved may be set to the same program type and the retrieval sequence thereof may be changed every program type. In such a case, this approach may decrease the retrieval efficiency because active library storage areas ineffective for retrieval are mixed.

### [Example of Application]

Next, an example applied to a Java program will be explained below.

In the Java program, the dynamic link is realized in the form of calling out a class necessary in execution, while the class is handled as a link unit, as described above. Now it is assumed that the first class characterized by the first program type and the second class characterized by the second program type exist in the lower hierarchy of the base class. For example, the first class is a class characterized by "i application" served by NTT DoCoMo Co., Ltd. The second class is a class characterized by MIDlet (an application unit in MIDP (Mobile Information Device Profile). In this case, The class in the lower hierarchy of the first class and the class in the lower hierarchy of the second class have the same function but are different in the specification. Hence, even if a library to be linked to the first class and a library to be linked to the second class have the same function, the first and second classes are differently installed.

In such a case, according to the present invention, the class under the first class is classified as the first program type and the class under the second class is classified as the second program type. Whether or not a certain class belongs to the first class or the second class can be known with the method of using a comparison operator "instanceof". Hence, the selector means 5 executes "instanceof" to the class starting execution. The class is decided as the first program type if the first class is a predecessor or is decided as the second program type if the second class is a predecessor.

The active library information 2-1 holds the location information and the retrieval sequence in an active library storage area corresponding to the first program type. The active library information 2-2 holds the location information and the retrieval sequence in an active library storage area corresponding to the second program type. Java corresponds to CLASSPATH. An active library storage area corresponds to, for example, a sub-directory. The location information corresponds to the name of the sub-directory. In the Java, the identifier identifying a library becomes package name + class name. The dynamic linker 3 retrieves a specified subdirectory in a specified sequence. Then, when the class of a library having a specified identifier is found, the loader loads it into the memory.

The present invention has been applied to the Java program as described above. However, the present invention may be applied to other languages. such as C++, that can implement a dynamic linkage of a library in execution.

According to the present invention as described above, the retrieval sequence of active library storage areas to be retrieved is changed in accordance with the type of a program in execution. This allows libraries, each having the same identifier and installed differently, to be selectively used in accordance with the program type.

Moreover, programs of plural types, utilizing libraries each of which has the same identifier and is installed differently, can be operated on the same computer system.

While the present invention has been described in its preferred embodiments, it is to be understood that the words which have been used are words of description rather than limitation, and that changes may be made to the invention without departing from its scope as defined by the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

An active library retrieval method in a dynamic link which dynamically links a library in execution of a program, comprising the step of changing automatically a retrieval sequence of active library storage areas to be retrieved in accordance with the type of a program in execution.

## Claims

1. An active library retrieval method in which an executing program is dynamically linked to a library, the method comprising a step of automatically changing a retrieval sequence of active library storage areas to allow retrieval in accordance with the type of a program being executed.

2. An active library retrieval method as in claim 1, wherein the step of automatically changing the retrieval sequence comprises the steps of:
selecting active library information from a holder means in accordance with the type of a program being executed, said holder means holding said active library information for each program type, said active library information determining a retrieval sequence of active library storage areas to be retrieved;
retrieving a library with an identifier specified by a selected active program, in accordance with an active library storage area and a retrieval sequence indicated by selected active library information; and,
linking said retrieved library to said program.

3. A dynamic linker that retrieves a library with an identifier specified by a program in execution in accordance with an active storage area and a retrieval sequence thereof, and then links said retrieved library to said program, said active library storage area and said retrieval sequence being indicated by active library information according to a type of program in execution, wherein the information is one set out of plural sets of active library information and determines a retrieval sequence of said active library storage area to be retrieved.

4. An active library retrieval device for dynamically linking an executing program to a library, the device causing a retrieval sequence of active library storage areas to be automatically changed in accordance with the type of program being executed.

5. An active library retrieval device as in claim 4, wherein the device comprises:
a holder means for holding the active library information for each program type, said active library information determining a retrieval sequence of active library storage areas;
a selector means for selecting active library information from said holder means in accordance with the type of program being executed; and,
a dynamic linker for retrieving a library with an identifier specified by a selected active program, in accordance with an active library storage area and a retrieval sequence indicated by selected active library information, and for linking said retrieved library to said program.

6. A computer program for executing the steps of:
holding active library information in a holder means for each program type, said active library information determining a retrieval sequence of active library storage areas;
selecting active library information from the holder means in accordance with the type of program being executed;
retrieving a library with an identifier specified by a selected active program, in accordance with an active library storage area and a retrieval sequence indicated by selected active library information; and,
linking said retrieved library to said program.

7. A record medium storing the program of claim 6.
